# EUROPÄISCHE PATENTSCHRIFT

(11) **EP 3 649 459 B1**
(45) Veröffentlichungstag und Bekanntmachung des Hinweises auf die Patenterteilung: **15.01.2025**
(21) Anmeldenummer: 18736879.0
(22) Anmeldetag: 02.07.2018
(51) Int. Cl.: G01N 21/84, A45D 44/00, G01N 21/3563, G01N 21/359, G01N 21/25

(54) **SYSTEM ZUM VERWALTEN VON HAARZUSTANDSINFORMATION UND VERFAHREN ZUM OPTIMIEREN EINES KOSMETISCHEN BERATUNGSSYSTEMS**
SYSTEM FOR MANAGING HAIR CONDITION INFORMATION AND METHOD FOR OPTIMIZING A COSMETIC CONSULTATION SYSTEM
SYSTÈME POUR LA GESTION D'INFORMATIONS D'ÉTAT DE CHEVELURE ET PROCÉDÉ POUR L'OPTIMISATION D'UN SYSTÈME DE CONSEILS COSMÉTIQUES

(30) Priorität: 07.07.2017 DE 102017211596
(43) Veröffentlichungstag der Anmeldung: 13.05.2020
(73) Patentinhaber: Henkel AG & Co. KGaA, 40589 Düsseldorf (DE)
(72) Erfinder: KATZAROV, Jordan, 40591 Düsseldorf (DE)
(86) Internationale Anmeldenummer: PCT/EP2018/067800
(87) Internationale Veröffentlichungsnummer: WO 2019/007902

(56) Entgegenhaltungen:
- EP-A1- 1 629 775
- WO-A1-2018/219895
- US-A1- 2005 256 733
- US-A1- 2007 265 867
- US-A1- 2014 118 521

## Beschreibung

Die Erfindung betrifft ein System zum Verwalten von Haarzustandsinformation und ein Verfahren zum Optimieren eines kosmetischen Beratungssystems.

Im Bereich der kosmetischen Haarbehandlung sind statische Datensysteme bekannt, die basierend auf einmalig eingepflegten Daten, eine Information für Nutzer oder Kunden bereitstellen.

Die zur Verfügung gestellte Information ist statisch. Die Systeme sind in der Lage, abhängig von nutzerspezifischen Eingaben unter Einbindung eines Datenspeichers eine Information aus einem Datenspeicher zu ermitteln und dem Nutzer Information betreffend beispielsweise eines Haarfarbtons bereitzustellen.

Es ist beispielsweise ein Verfahren bekannt, das einen Nutzer bei einer Auswahl eines Haarfarbtons vor einem Färbevorgang seiner Haare unterstützt. Das System kann dem Nutzer basierend auf seiner zuvor gemessenen Haarfarbe eine statische Vorhersage über die sich nach einer Behandlung seines Haars mit einem Haarfärbeprodukt einstellenden Haarfarbe geben.

Das System arbeitet jedoch mit statischen Haarreferenzfarben als Ausgangsfarben, die mit der Haarfarbe des Nutzers vor der Haarfärbung verglichen werden können, und statischen Zielhaarfarbtönen. Eine zwischen zwei angrenzenden Haarreferenzfarben liegende tatsächliche Haarfarbe eines Nutzers vor einem Haarfärbevorgang wird folglich nicht seiner realen Haarfarbe entsprechend eingestuft, sondern einer ähnlichen, aber möglicherweise in einem Farbton abweichenden Referenzhaarfarbe zugeordnet. Folglich ergibt sich eine Ungenauigkeit bei der Angabe entsprechender Zielhaarfarben. Dem Nutzer wird eine in dem System entsprechende Referenzhaarfarbe als Haarzustandsergebnis nach der Haarbehandlung präsentiert. Dadurch kann ein vorhergesagtes Haarzustandsergebnis verfälscht werden, was zu einer Unzufriedenheit des Nutzers führen kann. Ferner sind die bekannten Systeme nicht vorgesehen, einen Unterschied zwischen einem vorhergesagten Haarfarbwert und einem nach einer Haarbehandlung ermittelten tatsächlichen Haarfarbwert zu ermitteln und ihre nutzerspezifische und an den Nutzer weitergegebene Information abhängig von dem ermittelten Unterschied zu optimieren.

Dokument US 2014/0118521 A1 beschreibt ein System und ein Verfahren zur Bestimmung einer Farbrezeptur für die Änderung eines Haares von einer Ausgangsfarbe in eine Zielfarbe. Dokument US 2005/0256733 A1 beschreibt ein System zur Darstellung von Haarsträhnen und zur Bestimmung der zeitlichen Entwicklung der Haare eines Nutzers. Dokument US2007/0265867 A1 beschreibt ein Verfahren zur Unterstützung von Friseuren beim Haarschneiden, bei der eine Frisur auf ein Display mit den Haaren eines Nutzers projiziert wird. Dokument WO 2018219895 A1 gehört nicht zum Stand der Technik im Sinne der Artikels 54(2) und (3) EPÜ. Es offenbart ein Verfahren bzw. eine Vorrichtung zum Bereitstellen eines Haarbehandlungsmittels.

Es besteht folglich eine Nachfrage an einem System, welches eine gespeicherte Haarzustandsinformation, beispielsweise ein Haarfarbton von Nutzern, abhängig von real erzielten Haarfarbergebnissen aktualisiert, und an einem Verfahren, mittels dessen die vorhergesagte Haarzustandsinformation, beispielsweise eine Vorhersage eines Erscheinungsbildes von Haar von Nutzern, optimiert oder präziser angeben werden kann.

Lösungen für diese Aufgabe werden durch das System nach Anspruch 1 und das Verfahren nach Anspruch 10 bereitgestellt.

Die Erfindung ermöglicht es, einen vorhergesagten Haarzustand mittels einer Nachmessung des tatsächlichen Haarzustands nach einer Haarbehandlung eines Nutzers zu vergleichen.

Darüber hinaus ermöglicht die Erfindung eine Abweichung zwischen einer in dem System gespeicherter Haarzustandsinformation und einem tatsächlichen Haarzustand eines Nutzers nach einer Haarbehandlung zu ermitteln.

Verschiedene Ausführungsbeispiele stellen ein optimiertes Kosmetikberatungssystem bereit.

Das Kosmetikberatungssystem kann als ein lernendes Kosmetikberatungssystem eingerichtet sein.

Die Erfindung stellt ein effizientes Beratungssystem bereit, das mittels einer Differenz einer Haarzustandsinformation, die nach einer Haarbehandlung von Haaren eines Nutzers erfasst werden kann, ein Datenbanksystem, das zum Speichern nutzerspezifischer Haarzustandsinformation vorgesehen ist, aktualisieren kann.

Ein System zum Verwalten von Haarzustandsinformation wird bereitgestellt. Das System kann aufweisen: Mindestens einen Sensor zum Ermitteln einer Haarzustandsinformation eines Nutzers, einen Speicher, wobei der Speicher eingerichtet ist, zumindest die Haarzustandsinformation zu speichern, und einen Prozessor, wobei der Prozessor eingerichtet ist, zumindest die Haarzustandsinformation in dem Speicher basierend auf einer Abweichung einer mittels des Sensors ermittelten Haarzustandsinformation des Nutzers nach einer Haarbehandlung von einer vorhergesagten Haarzustandsinformation des Nutzers zu aktualisieren.

Der Speicher kann ein Server, eine Datenbank oder eine Cloud umfassen. In dem Speicher kann Information, beispielsweise in Form von Daten, ausgelesen, eingelesen oder durch aktualisierte Daten ersetzt oder gelöscht werden. Der Speicher kann beispielsweise eine umfassende Datenbankvorrichtung sein, in der personenbezogene oder nutzerspezifische Information bezüglich Haarzuständen und allgemeine Information bezüglich Haarbehandlungsprodukten gespeichert sein können. Ferner kann der Speicher Information umfassen, die es ermöglichen, einen Nutzer vor einer Haarbehandlung, beispielsweise mit einem Haarbehandlungsprodukt der Firma Schwarzkopf, mittels einer Identifizierung des Nutzers zu ermitteln. Der Begriff Haarzustand vor einer Haarbehandlung kann auch als Ausgangshaarzustand bezeichnet werden. Der Begriff Haarzustand nach einer Haarbehandlung durch ein Färben oder Kolorieren, Bleichen oder nach einem Behandeln von Haar mit einem kosmetischen Haarbehandlungsprodukt kann auch als Haarzustandsergebnis bezeichnet werden.

In dem Speicher kann für bestehende, bereits in einem Datenbanksystem angelegte Nutzer Information verwaltet werden und für neue Nutzer eine entsprechende Information angelegt werden. Ferner kann auf die in dem Speicher gespeicherte oder hinterlegte Information mittels eines Prozessors zugegriffen werden. Der Prozessor kann eingerichtet sein, die mit dem Sensor erfasste Information oder erfassten Daten in den Speicher zu speichern und auf die gespeicherte Information oder die gespeicherten Daten zuzugreifen.

Der Speicher kann beispielsweise ein Großdatenspeicher, beispielsweise ein Datenserver, ein Cloud-Server, ein Konstant-Information-Miner-Server (KNIME-Server) oder ein Big-Data-KNIME-Server sein.

Das System kann ein Datenmanagement-System umfassen. Ferner kann das System einen Algorithmus oder ein Berechnungsmodell oder ein Softwareprogramm umfassen, das beispielsweise mittels eines Prozessors ausgeführt werden kann. Der Algorithmus kann beispielsweise in einem Prozessor oder in einem Speicher einer mobilen Einrichtung wie beispielsweise einem Smartphone, einem Tablet oder in einer stationären Einrichtung wie beispielsweise einer Cloud oder einem Smart Mirror ("Intelligenter Spiegel") gespeichert sein.

Nach dem erfindungsgemäßen Gedanken kann auf vorteilhafte Weise erreicht werden, dass mittels eines Aktualisierens der im Speicher hinterlegten und für vorhergesagte Haarzustände verwendeten Information eine Optimierung des Systems bereitgestellt wird. Dadurch wird eine optimierte Hervorsage von möglichen auf von einem Nutzer ausgewählten Wunschhaarfarbtönen basierende Zielhaarfarben erreicht, beispielsweise bei einem Haarfärbverfahren oder einem Haarbleichverfahren.

Ferner kann nach dem erfindungsgemäßen Gedanken auf vorteilhafte Weise erreicht werden, dass ein Verwaltungssystem von Haarzustandsinformation durch das Aktualisieren seiner intern gespeicherten Daten durch bereits durchgeführte Haarbehandlungen bei Nutzern lernt, indem entsprechende Haarzustandsinformations-Speicherwerte in dem Speicher basierend auf nach einer Haarbehandlung gemessenen Haarzuständen angepasst werden. Somit kann mittels des Verwaltungssystems eine genauere Vorhersage beispielsweise von einer Zielhaarfarbe eines Nutzers als herkömmlich ermittelt werden. Ferner kann eine Leistungsfähigkeit des Verwaltungssystems verbessert werden.

Ferner kann eine erhöhte Nutzer- oder Kundenzufriedenheit bei der Anwendung von kosmetischen Haarbehandlungsprodukten, beispielsweise von Schwarzkopf-Haarbehandlungsprodukten, erreicht werden.

Weiterhin kann erreicht werden, dass Erkenntnisse über Haarfarbtonwerte, die sich bei einer Vielzahl von natürlichen Haaren beispielsweise als Haarfärbeergebnis oder Haarbleichergebnis nach einer Haarbehandlung ergeben, in einem Speicher archivierbar sind und wiederaufrufbar sind.

Die Haarzustandsinformation umfasst einen Haarschädigungsgrad und einen Haarfarbton. Der Haarschädigungsgrad kann, beispielsweise auf einer Skala von 0 bis 10, von 0 bis 100, von wenig über mittel bis stark etc. unterteilt, für eine Haarsträhne oder eine Haarfaser eines Nutzers angegeben werden. Der Haarschädigungsgrad kann beispielsweise Auskunft über den Zustand der Haarschuppenschicht (Cuticula), des Haarmarks (Medulla) und der Haarfaserschicht (Cortex) etc. des Haarschaftes umfassen. Der Haarschädigungsgrad kann beispielsweise eine äußere Schädigung und/oder eine innere Schädigung des Haars umfassen. So kann beispielsweise ein Schädigungsgrad beeinflusst werden durch eine tägliche Haarbehandlung, eine Haarwäsche, ein Bürsten, eine Hitzebehandlung, chemische Behandlungen, Umweltfaktoren etc.

Ein Haarfarbton oder ein Haarfarbwert kann beispielsweise als ein L-, a-, b-Farbwert in einem L-, a-, b-Farbraum angegeben werden und in einem Speicher abgespeichert werden. Der Haarfarbton kann ferner als ein RGB-Farbwert in einem RGB-Farbsystem oder als CMYK-Farbwert in einem CMYK-Farbsystem angegeben werden. Der Haarfarbton kann eine Farbinformation, beispielsweise einen mit a* und b* parametrisierten Farbton, umfassen.

Es ist jedoch selbstverständlich, dass die Haarzustandsinformation nicht auf einen Haarschädigungsgrad und einen Haarfarbton beschränkt ist, sondern weitere Haarzustandsinformation umfassen kann. So kann in verschiedenen Ausführungsbeispielen der Sensor beispielsweise eine mit einem Sensor ausgestattete Haarbürste oder einen mit einem Sensor ausgestatteten Haarkamm umfassen. Die Haarbürste oder der Haarkamm kann Sensoren zum Messen von an den Borsten der Haarbürste oder an den Zähnen des Kamms auftretenden Kräften umfassen. Die gemessenen Kräfte beim Bürsten oder Kämmen von Haar eines Nutzers können in der Bürste oder dem Kamm beispielsweise in einem internen Speicher gespeichert werden oder über eine drahtgebundene oder drahtlose Verbindung an den Speicher übermittelt werden. So kann mittels des Systems beispielsweise eine Haarzustandsinformation in Bezug auf eine Haarglätte oder eine Haarkämmbarkeit ermittelt werden.

In verschiedenen Ausführungsbeispielen kann der Sensor einen Nahinfrarotspektroskopie-Sensor (NIR-Sensor) und/oder eine Kamera und ein Farbkalibriermittel umfassen.

In verschiedenen Ausführungsbeispielen kann ein Schädigungsgrad von Haar, hierin auch als Haarschädigungsgrad bezeichnet, mittels eines Molekularsensors oder Nahinfrarotspektroskopie-Sensors (NIR-Sensors) ermittelt werden. Mittels des NIR-Sensors kann beispielsweise ein innerer oder interner Haarschädigungsgrad ermittelt werden. Bei der NIR-Sensortechnik können im nahinfraroten Bereich Molekülschwingungen durch die elektromagnetische Strahlung angeregt werden. Der Nah-Infrarotbereich liegt etwa im Bereich von ungefähr 780 bis 3000 nm. Der Nah-Infrarotbereich kann in einen kurzwelligen Bereich von 780 bis 1400 nm und in einen langwelligen Bereich von 1400 nm bis 3000 nm unterteilt werden. Bei der NIR-Spektroskopie können Wechselwirkungen der elektromagnetischen Strahlung mit Haar gemessen werden und ein Aufschluss über einen Absorptionsgrad oder einen Reflexionsgrad erhalten werden. So lassen sich beispielsweise aus Absorptionsspektren verschiedene Inhaltsstoffe von Haar qualitativ oder quantitativ ermitteln. Ferner können über eine Auswertung von Oberflächenstreueffekte Materialeigenschaften von Haar wie beispielsweise eine Rauigkeit von Haar messbar werden. Ferner kann ein von Grenzflächen erzeugtes Interferenzmuster in Spektren zur Schichtdickenbestimmung von Haar verwendet werden. Die NIR-Spektroskopie kann sich besonders eignen, um einen Wassergehalt-Gehalt, einen Aminosäure-Gehalt, einen Proteinanteil oder einen Lipid-Gehalt von Haar zu ermitteln. Ferner kann die NIR-Spektroskopie beispielsweise eingesetzt werden, um ein Fasergewicht von Haar festzustellen. So kann beispielsweise ein Durchdringungsgrad des Lichts durch ein Haar oder eine Haarsträhne im NIR-Wellenlängenbereich gemessen werden.

Bei der Nahinfrarotspektroskopie können beispielsweise das Reflexionsprinzip und das Transmissionsprinzip unterschieden werden. Bei der Reflexionsmessung im Falle des Reflexionsprinzips kann das Haar beispielsweise mit weißem Halogenlicht bestrahlt werden. Der reflektierte NIR-Anteil wird von einem NIR-Sensor erfasst. Bei der Transmissionsmessung wird im Falle des Transmissionsprinzips Haar mit weißem Halogenlicht durchstrahlt. Das durchdringende Halogenlicht kann durch den NIR-Sensor erfasst werden. Somit kann beispielsweise eine Information über eine Elastizität, einen Dehnungsgrad, eine Steifigkeit, eine Querschnittsfläche, eine Form oder eine Dichte von Haar ermittelt werden. Ein NIR-Sensor kann beispielsweise für die Messung eines Feuchtigkeitsgehalts von Haar eingesetzt werden. Somit kann eine hohe Messauflösung ermöglicht werden.

Verschiedene Ausführungsbeispiele können mittels eines NIR-Sensors eine nicht-intrusive, berührungslose optische Messung eines Schädigungsgrades von Haar eines Nutzers ermöglichen. Es können so Haarschädigungen durch mechanische Einflüsse festgestellt werden und unter Anwendung entsprechender Pflegemittel Haarschädigungen nachhaltig korrigiert werden. Der NIR-Sensor kann beispielsweise in einem Smartphone oder Tablet integriert sein.

In verschiedenen Ausführungsbeispielen kann in dem Speicher oder in dem NIR-Sensor ferner eine Mehrzahl von Informationen bezüglich eines Haarschädigungsgrades gespeichert sein, so dass Daten, die mittels des NIR-Sensors vom gemessenen Haar oder mittels des NIR-Sensors von der gemessene Haarsträhne erhalten werden, mit Daten in dem Speicher verglichen werden können. Für unterschiedliche Haarschädigungsgrade können unterschiedliche Schädigungsstufen in dem Speicher hinterlegt sein.

In verschiedenen Ausführungsbeispielen kann eine Haarfarbe oder ein Haarfarbton einer Person, hier auch als Nutzer bezeichnet, mittels einer Kamera oder mittels einer Kamera und eines Farbkalibriermittels ermittelt werden. Als Kamera ist jede Kamera einsetzbar, die über eine ausreichende Auflösung zum Erfassen einer Haarsträhne oder eines einzelnen Haars verfügt. Die Kamera kann eine digitale Kamera sein. Beispielsweise kann die Kamera eine Kamera sein, die in einem Smartphone oder in einem Tablet integriert ist.

Ein Farbkalibriermittel, beispielsweise in Form einer Kalibrierfarbkarte oder einer Kalibrierhaarsträhne, kann verwendet werden, um die Haarfarbe eines Nutzers exakter identifizieren zu können. Auf dem Farbkalibriermittel sind im Falle einer Kalibrierfarbkarte ein Farbbereich, beispielsweise von Hellblond über Brauntöne hin zu eine Schwarz, eine Mehrzahl von Haarfarben aufgebracht. So ist es mittels einer Kalibrierfarbkarte möglich, unabhängig von äußeren Lichteinflüssen eine genaue Angabe über den Haarfarbton eines Nutzers vor und nach einer Haarbehandlung mittels eines kosmetischen Produkts zu erhalten. Ein kosmetisches Produkt kann vorliegend ein Haarbehandlungsprodukt wie ein Haarpflegeprodukt (beispielsweise eine Haarkur, ein Haaröl, eine Haarmaske, ein Conditioner), ein Haarfärbemittel, ein Haarstylingmittel, ein Haarbleichmittel etc. umfassen. Bei einer Haarfarbtonmessung eines Nutzers kann beispielsweise mittels einer Kamera nicht nur das Haar, sondern auch eine neben dem Haar angebrachtes Kalibriermittel von der Kamera in einem Bild erfasst werden. Das Bild kann beispielsweise ein digitales Bild sein. Ein Prozessor kann in dem aufgenommenen Bild beispielsweise einen Haarbereich oder eine Haarbereichsfläche mittels gängigen Verfahren der digitalen Bildanalyse ermitteln. Ein Prozessor kann mittels gängigen digitalen Bildanalyseverfahren die im aufgenommenen Bild enthaltenen Farbtöne mit den im Bild enthaltenen Farbtönen des Farbkalibriermittels vergleichen und einen Farbton ermitteln, der einem Farbton auf dem Farbkalibriermittel am ähnlichsten ist. Der mittels des Prozessors ermittelte Farbton kann dann in einem Speicher zur Archivierung gespeichert werden.

In verschiedenen Ausführungsbeispielen kann der Sensor ein integrierter mobiler Sensor sein, der einen NIR-Sensor, eine Kamera und eine Farbkalibriermittel aufweist. In verschiedenen Ausführungsbeispielen kann ein einziger mobiler Sensor, beispielsweise ein VIS/NIR-Sensor, realisiert werden, der sowohl einen Haarschädigungsgrad als auch einen aktuellen Haarfarbton eines Nutzers auf einfache Art und Weise, schnell und unkompliziert messen kann. Auch kann eine Messung eines Haarfarbtons und eine Messung eines Haarschädigungsgrades nahezu gleichzeitig durchgeführt werden.

In verschiedenen Ausführungsbeispielen kann ein praktisches und kostengünstiges Farbkalibriermittel zum Ermitteln von Haarfarbtönen mit einer Kamera, beispielsweise eine Kamera eines Smartphones oder eines Tablets, eingesetzt werden.

Ferner kann eine Applikation, hierin auch als Computer-App oder App abgekürzt, für unterschiedliche mobile Plattformen bereitgestellt werden, die zum Messen mindestens eines Haarfarbtons mittels einer Kamera und eines Farbkalibriermittels und zum Anzeigen einer gemessenen Haarzustandsinformation wie beispielsweise eines ermittelten Haarfarbtons eines Nutzers, eines Haarschädigungsgrades eines Nutzers, eines inneren Haarschädigungsgrades eines Nutzers, möglicher vorhergesagter Haarfarbtönen und weiterer nutzerbasierter Information vorgesehen ist. Die App kann beispielsweise eine Prozentangabe oder eine grafische Darstellung eines Haarschädigungsgrades aufweisen. Mittels der Computer-App kann ein Nutzer beispielsweise mindestens eine von dem Nutzer gewünschte Zielhaarfarbe aus beispielsweise grafisch in der Computer-App dargestellten Zielhaarfarbtönen auswählen. Ferner kann mittels der Computer-App ein Bestellen oder Nachkaufen von kosmetischen Haarbehandlungsprodukten erfolgen.

In verschiedenen Ausführungsbeispielen kann der Sensor für einen Gebrauch in einem professionellen Haarstudio oder in einem Premium-Haarsalon zusätzliche Sensoren wie beispielsweise einen NIR-Sensor umfassen.

In verschiedenen Ausführungsbeispielen kann das System ferner eine Anzeigevorrichtung zum Darstellen von zumindest Information basierend auf der in dem Speicher gespeicherten Haarzustandsinformation umfassen. Die Anzeigevorrichtung kann beispielsweise ein Bildschirm eines Fernsehers, eines Smartphones, eines Tablet oder eines Smart Mirrors umfassen.

Bei einem Smart Mirror kann es sich um einen intelligenten Spiegel oder ein Spiegel-Signal-Hybrid-Display handeln. Dabei können Vorteile eines Spiegels mit einem digitalen Display kombiniert werden. Der Smart Mirror kann einerseits als herkömmlicher Spiegel dienen. Andererseits kann der Smart Mirror beispielsweise als ein visueller Präsentationsbildschirm oder Werbetafel dienen. Der Smart Mirror kann beispielsweise mittels eines hohen Reflexionsgrades visuell klare Echtzeit-Spiegelbilder eines Nutzers und ergänzende Inhalte neben dem Spiegelbild oder mit dem Spiegelbild überlappend darstellen. Der Smart-Mirror kann bei der Entscheidungsphase bei einer Haarbehandlung eingesetzt werden. Ein Smart Mirror oder eine Mehrzahl von Smart Mirrors kann beispielsweise in Friseursalons angebracht sein. Mittels des Smart Mirrors können digital auf dem Smart Mirror bereitgestellte Haarfarbtöne dem Spiegelbild virtuell überlagert werden. Hierzu kann mittels des Smart Mirrors der jeweilige Wunschhaarfarbton über das Spiegelbild gelegt werden und eine realitätsnahe Vorhersage von Haarfarben eines Nutzers nach einer Haarbehandlung ermöglicht werden. Der Smart Mirror kann ferner zur Präsentation kundenspezifischer Behandlungsprodukte wie beispielsweise einem Haarshampoo, einer Haarmaske, einem Haaröl oder weiterer kundenspezifischer Werbung etc. eingesetzt werden. Der Smart Mirror kann beispielsweise mittels eines Touchscreens von einem Nutzer und/oder von einem Friseur bedient werden. Ferner kann der Smart Mirror über eine drahtlose Verbindung wie beispielsweise WLAN oder Bluetooth verfügen, um mit einem Sensor, mobilen Einrichtungen wie Smartphones oder Tablets, einem Prozessor oder einem Speicher Daten auszutauschen. Der Smart Mirror kann beispielsweise mittels eines Smartphones oder Tablets gesteuert werden. Der Smart-Mirror kann beispielsweise einen Vollbildmodus aufweisen, bei dem die Mehrzahl der Spiegelfläche mit digitaler Information bedeckt ist. Ferner kann der Smart Mirror auch als mobile Einrichtung vorgesehen sein.

In verschiedenen Ausführungsbeispielen kann der Sensor in einer mobilen Einrichtung realisiert sein und die Anzeigevorrichtung in der mobilen Einrichtung und/oder in einem Smart Mirror realisiert sein.

Die mobile Einrichtung kann beispielsweise ein Smartphone, ein Tablet etc. sein. Die Kamera des Smartphones oder Tablets kann eingerichtet sein, mindestens ein digitales Bild von Haaren eines Nutzers aufzunehmen. Die Anzeigevorrichtung kann ein Bildschirm des Smartphones oder des Tablets sein. Die Anzeigevorrichtung kann als ein Smart Mirror realisiert sein, der Information basierend auf der mittels des mindestens einen Sensors aufgenommenen Haarzustandsinformation wiedergeben kann.

Der Smart Mirror kann eingerichtet sein, dem Nutzer oder einem ihn beratenden Friseur Information basierend auf Daten aus dem Speicher grafisch darzustellen. Ferner können das Smartphone, Tablet oder der Smart Mirror eingerichtet sein, dem Nutzer oder dem Friseur zusätzliche Information wie beispielsweise Information bezüglich eines Haarschädigungsgrades, einer Haartrockenheit, eines Aufhellungszustands des Haars, aktueller aktuellen Luftfeuchtigkeit, Wettervorhersagen etc. darzustellen. Ferner kann die Anzeigevorrichtung ein Anzeigen möglicher durch den Nutzer oder Friseur auswählbarer Zielhaarfarben umfassen. Ferner kann die Anzeigevorrichtung ein Anzeigen von News und Trends im Bereich kosmetischer Haarbehandlungsprodukte oder Mode umfassen.

In verschiedenen Ausführungsbeispielen kann ein Informationsaustausch zwischen der mobilen Einrichtung und dem Speicher mittels einer Anwendung (Computer-App) realisiert sein. Das System kann beispielsweise mittels einer Anwendung, Applikation oder Computer-App realisiert sein oder diese umfassen. Die Computer-App kann beispielsweise eine iOS-App, Android-App etc. sein. Die Computer-App kann beispielsweise auf dem Smartphone oder Tablet bereitgestellt werden und ein Programm umfassen, das dem Benutzer schriftliche oder grafische Anweisungen gibt, wie der Nutzer Bilder mittels der im Smartphone oder Tablet integrierten Kamera aufzunehmen hat. Die Computer-App kann ferner eine drahtlose Verbindung mit dem Speicher aufbauen und umgekehrt, so dass die mittels dem mindestens einen Sensor aufgenommenen Bilder von Haar oder ein mit einem Sensor ermittelter Haarschädigungsgrad über die Computer-App an den Speicher übertragen werden kann. Die Computer-App kann in dem Speicher gespeicherte Daten aus dem Speicher lesen und diese mittels der Anzeigevorrichtung auf der mobilen Einrichtung bereitstellen. Es ist selbstverständlich, dass auch eine drahtgebundene Verbindung zum Übertragen von Information zwischen der mobilen Einrichtung und dem Speicher vorgesehen sein kann. Mittels der Computer-App kann ein Zugriff von unterwegs auf den Speicher vorgesehen sein.

In verschiedenen Ausführungsbeispielen kann der Prozessor ferner eingerichtet sein, einen mittels des Sensors erfassten Haarschädigungsgrad des Nutzers vor der Haarbehandlung mit einer Mehrzahl von in dem Speicher hinterlegten Haarschädigungsgraden zu vergleichen und/oder einen mittels des Sensors erfassten Haarfarbton des Nutzers vor der Haarbehandlung mit einer Mehrzahl von in dem Speicher hinterlegten Haarfarbtönen zu vergleichen, einen in dem Speicher hinterlegten ähnlichsten Haarschädigungsgrad und/oder ähnlichsten Haarfarbton zu ermitteln, und basierend auf dem jeweils ermittelten ähnlichsten Haarschädigungsgrad und/oder dem ermittelten ähnlichsten Haarfarbton und einer Wunschhaarfarbe des Nutzers einen vorhergesagten Haarzustand und/oder vorhergesagten Haarfarbton bereitzustellen.

Der Speicher kann hinterlegte Haarschädigungsgrade und/oder Haarfarbtöne speichern oder diese in Form passender Speicherwerte speichern, die beispielsweise jeweils einem Benutzer zugeordnet werden können. So kann beispielsweise einem Nutzer eine braune Haarfarbe und ein starker Haarschädigungsgrad, einem weiteren Nutzer eine schwarze Haarfarbe und ein geringer Haarschädigungsgrad und einem weiteren Nutzer eine helle Haarfarbe und ein mittlerer Haarschädigungsgrad in dem Speicher zugeordnet werden. Die Information oder Daten in dem Speicher können personenspezifisch eingelesen und personenspezifisch ausgelesen werden. Ferner kann der Speicher eine Mehrzahl von möglichen Haarschädigungsstufen und Werte von möglichen Haarfarbtönen aufweisen.

Mittels des Systems können dem Nutzer beispielsweise mögliche Haarfarbtöne mittels der Anzeigevorrichtung präsentiert werden, so dass der Nutzer aus einer Gesamtzahl von möglichen Haarfarbtönen mindestens einen Wunschhaarfarbton auswählen kann. Der Nutzer kann auch mehrere Wunschhaarfarbtöne aus der Gesamtzahl von möglichen Haarfarbtönen auswählen. Das System kann dem Nutzer mittels der Anzeigevorrichtung beispielsweise basierend auf fünf Wunschhaarfarben eine Auswahl von fünf vorhergesagten Haarfarbtönen präsentieren. Das System ist jedoch nicht darauf beschränkt und es ist selbstverständlich, dass das System jede beliebige Anzahl von vorhergesagten Haarfarbtönen basierend auf einer Gesamtzahl von im Portfolio zur Verfügung gestellten Haarfarbtönen dem Nutzer vor einer Haarbehandlung auf der Anzeigevorrichtung anzeigen kann.

Der Prozessor kann den mittels des Sensors ermittelten Haarschädigungsgrad mit einer Mehrzahl von im Speicher hinterlegten oder gespeicherten Haarschädigungsgraden vergleichen. Der Prozessor kann beispielsweise den mittels des Sensors ermittelten Haarschädigungsgrad jeweils einzeln mit jedem der Mehrzahl von in dem Speicher gespeicherten Haarschädigungsgraden vergleichen, bis der Prozessor einen Haarschädigungsgrad in dem Speicher ermittelt hat, der dem mittels des Sensors ermittelten Haarschädigungsgrades am nächsten kommt. Der Prozessor kann den am nächsten kommenden Haarschädigungsgrad beispielsweise auswählen und temporär oder andauernd in dem Speicher speichern.

Der Prozessor kann beispielsweise den mittels des Sensors ermittelten Haarfarbton oder Haarfarbtonwert jeweils einzeln mit jedem der Mehrzahl von in dem Speicher gespeicherten Haarfarbtönen vergleichen, bis der Prozessor einen Haarfarbtonwert in dem Speicher ermittelt hat, der dem mittels des Sensors ermittelten Haarfarbtonwert am nächsten kommt. Der Prozessor kann den am nächsten kommenden Haarfarbtonwert beispielsweise auswählen und temporär oder andauernd in dem Speicher speichern. Der Prozessor kann ferner einen von dem Nutzer ausgewählten Wunschhaarfarbton oder Wunschhaarfarbtonwert oder ausgewählte Wunschhaarfarbtöne oder Wunschhaarfarbtonwerte mit den in dem Speicher gespeicherten Haarfarbtönen vergleichen, den jeweils am nächsten liegenden Haarfarbton im Speicher auswählen und temporär oder andauernd in dem Speicher speichern. Die zwischengespeicherten Werte können in dem Speicher folglich für spätere Berechnungen mittels des Prozessors zur Verfügung stehen. Die Werte können in einem Speicher des Prozessors zwischengespeichert sein.

Der Prozessor kann basierend auf dem im Speicher ermittelten nächstliegenden Haarschädigungsgrad, dem im Speicher ermittelten Haarfarbton und dem mindestens einen von dem Nutzer ausgewählten Wunschhaarfarbton mindestens einen vorhergesagten Haarzustand mittels beispielsweise der Anzeigevorrichtung vorhersagen oder prognostizieren. Der vorhergesagte Haarzustand des Nutzers oder die vorhergesagten Haarzustände des Nutzers können dem Nutzer mittels des Bildschirms auf dem Smartphone, auf dem Tablet oder auf dem Smart Mirror abgebildet werden.

Der Smart Mirror kann beispielsweise eine verspiegelte Fläche vorsehen, in der der Nutzer sein Spiegelbild sehen kann. Ferner kann der Smart Mirror eine integrierte Kamera umfassen. Mittels der Kamera kann ein Bild von dem jeweiligen Nutzer aufgenommen werden. Mittels einer Gesichtserkennung kann der Nutzer identifiziert werden, indem die Information in dem zur Gesichtserkennung aufgenommenen Bild und die entsprechende personalisierte Information oder personalisierten Daten in dem Speicher aufgerufen und verglichen werden. Die personalisierte Information kann nutzerabhängig auf dem Smart Mirror dargestellt werden. Die Gesichtserkennung kann nach bekannten Verfahren, beispielsweise einer Analyse von Ausprägungen sichtbarer Merkmale im Bereich des frontalen Kopfes durch ein zweidimensionales Gesichtserkennungsverfahren oder ein dreidimensionales Gesichtserkennungsverfahren realisiert sein.

Das System kann ferner basierend auf mindestens einem Wunschhaarfarbton oder basierend auf mindestens einem Haarschädigungsgrad ein personalisiertes oder benutzerspezifisches kosmetisches Haarbehandlungsprodukt beispielsweise ein Haarshampoo, eine Haarmaske, ein Haarfärbemittel, ein Haaröl etc. dem Nutzer bereitstellen. Die mittels des Prozessors und des Speichers ermittelte Information kann beispielsweise an eine Abfüllstation weitergeleitet werden. Die Abfüllstation kann ein personalisiertes oder benutzerspezifisches Shampoo, ein Haarfärbemittel, eine Haarmaske, ein Haaröl etc. mischen/herstellen.

Das System kann ferner eine Computer-App und einen Onlineshop umfassen. Mittels des Onlineshops kann der Nutzer bereits für ihn spezifisch abgestimmte kosmetische Haarbehandlungsprodukte online kaufen oder nachbestellen. Die Computer-App und/oder der Onlineshop können für den Nutzer ein passendes Benutzerhandbuch oder eine sprachgesteuerte Benutzungsanleitung zu einem jeweiligen kosmetischen Haarbehandlungsprodukt bereithalten. Diese können heruntergeladen werden oder online abgerufen werden.

In verschiedenen Ausführungsbeispielen kann der Prozessor ferner eingerichtet sein, eine Abweichung zwischen einem vor einer Haarbehandlung mittels des Sensors ermittelten Haarfarbton oder eines vor einer Haarbehandlung vorhergesagten Haarfarbtons zu einem nach einer Haarbehandlung mittels des Sensors ermittelten Haarfarbtons durch einen Vergleich jeweils zugehöriger Haarfarbwerte zu ermitteln.

Die Abweichung kann eine Farbtondifferenz oder ein Farbabweichungsbetrag sein. Der mittels des Sensors ermittelte Haarfarbton vor einer Haarbehandlung kann beispielsweise von dem nach einer Haarbehandlung mittels des Sensors ermittelten Haarfarbtons abgezogen werden, um eine Abweichung feststellen zu können.

In verschiedenen Ausführungsbeispielen kann der vor einer Haarbehandlung vorhergesagte Haarfarbton von dem nach einer Haarbehandlung mittels des Sensors ermittelten Haarfarbtons abgezogen werden, um eine Abweichung dieser Werte feststellen zu können. Der für die Vorhersage mindestens eines Wunschhaarfarbtons verwendete Haarfarbton kann um eine ermittelte Abweichung korrigiert werden.

In verschiedenen Ausführungsbeispielen kann die zu einem Vorhersagen eines Haarfarbtons verwendete Information in dem Speicher optimiert werden. Ferner kann das zur nutzerspezifischen Beratung eingesetzte kosmetische Beratungssystem seine gespeicherte Haarzustandsinformation oder seine in einem Speicher archivierten Daten mit jedem behandelten Nutzer optimieren, denn durch einen Haarzustandsabgleich kann eine Prognose verbessert werden. Ferner kann eine Effektivität des personalisierten kosmetischen Beratungssystems erhöht werden. Ferner kann das personalisierte kosmetische Beratungssystem mit jeder durchgeführten Beratung eines Nutzers eine vorhersagbare Haarzustandsinformation immer weiter optimieren. Bei einer Durchführung einer Vielzahl von benutzerspezifischen kosmetischen Beratungen mittels des Systems kann eine Abdeckung unterschiedlicher Haarfarbtöne erreicht werden oder eine Mehrzahl von vorhergesagten Haarfarbtöne im Speicher angelegt werden. Das System ermöglicht Nutzern des Systems, von Ergebnissen zuvor mittels des Systems betreuter Nutzer zu profitieren. Folglich kann der Nutzer von zuvor an Haaren anderer Nutzer durchgeführter Pflegeanwendungen und Messungen profitieren. Ferner kann mittels des kosmetischen Beratungssystems eine umfassende Datenbank angelegt werden, die nicht auf einer statischen Haarzustandsinformation basiert, sondern auf realen gemessenen Haarzustandsinformationen.

In verschiedenen Ausführungsbeispielen kann der Prozessor ferner eingerichtet sein, die mittels des Sensors erfasste Haarzustandsinformation des Nutzers jeweils dem Nutzer in dem Speicher zuzuordnen.

In verschiedenen Ausführungsbeispielen kann eine Historie von Haarschädigungsgraden und Haarfarbtönen bezogen auf einen Nutzer angelegt werden. Basierend auf der über eine gewisse Zeit gespeicherten Information über die Haare jedes einzelnen Nutzers kann ein Behandlungserfolg der Haare über der Zeit erreicht werden. Auch können statistische Auswertungen basierend auf der Haarzustandsinformation für jeden Nutzer einzeln und für die Gesamtheit der Nutzer durchgeführt werden.

In verschiedenen Ausführungsbeispielen kann ein Verfahren zum Optimieren eines kosmetischen Beratungssystems bereitgestellt werden. Das Verfahren kann aufweisen: Ein Ermitteln mindestens einer Haarzustandsinformation eines Nutzers mittels mindestens eines Sensors vor und nach einer Haarbehandlung, ein Ermitteln einer Abweichung zwischen einer vorhergesagten Haarzustandsinformation basierend auf der mittels des Sensors ermittelten Haarzustandsinformation des Nutzers vor der Haarbehandlung und zwischen der mittels des Sensors ermittelten Haarzustandsinformation des Nutzers nach der Haarbehandlung, und ein Aktualisieren mindestens einer zum Ermitteln des vorhergesagten Haarzustands verwendeten Haarzustandsinformation in einem Speicher basierend auf der ermittelten Abweichung.

In verschiedenen Ausführungsbeispielen kann erreicht werden, dass für ein Ermitteln eines Haarzustands eines Nutzers vor einer Haarbehandlung und für ein Ermitteln eines Haarzustands eines Nutzers nach einer Haarbehandlung nur ein Sensor verwendet werden kann.

In verschiedenen Ausführungsbeispielen kann das im Laufe der Zeit eine stets verbesserte Prognose bezogen auf ein vorhergesagtes Haarerscheinungsbild liefern.

In verschiedenen Ausführungsbeispielen kann das Verfahren ferner ein Vergleichen der mittels des Sensors ermittelten Haarzustandsinformation des Nutzers vor der Haarbehandlung mit der mittels des Sensors ermittelten Haarzustandsinformation des Nutzers zeitlich nach der Haarbehandlung umfassen.

In verschiedenen Ausführungsbeispielen kann der Nutzer einen Zustand seiner Haare vor einer Haarbehandlung mit einem Zustand seiner Haare nach einer möglichen Haarbehandlung vergleichen. Somit kann der Nutzer den Erfolg der Haarbehandlung besser feststellen.

In verschiedenen Ausführungsbeispielen kann das Ermitteln einer Haarzustandsinformation des Nutzers ein Ermitteln eines Haarschädigungsgrades mittels eines NIR-Sensors umfassen und/oder ein Ermitteln eines Haarfarbtons des Nutzers mittels einer Kamera und eines Farbkalibriermittels umfassen.

In verschiedenen Ausführungsbeispielen kann das Ermitteln einer Haarzustandsinformation des Nutzers ein Ermitteln eines Haarschädigungsgrades mittels eines NIR-Sensors umfassen und/oder ein Ermitteln eines Haarfarbtons des Nutzers mittels eines Photometers umfassen.

In verschiedenen Ausführungsbeispielen kann das Ermitteln einer Haarzustandsinformation des Nutzers ein Ermitteln eines Haarschädigungsgrades und/oder ein Ermitteln eines Haarfarbtons des Nutzers mittels eines VIS/NIR-Sensors umfassen.

In verschiedenen Ausführungsbeispielen kann erreicht werden, dass mittels eines Verwendens eines NIR-Sensors eine nicht-intrusive, berührungslose optische Messung eines Schädigungsgrades von Haar eines Nutzers ermöglicht wird. Es können so Haarschädigungen beispielsweise durch mechanische Einflüsse festgestellt werden und Haarschädigungen nachhaltig korrigiert werden.

In verschiedenen Ausführungsbeispielen kann das Ermitteln der vorhergesagten Haarzustandsinformation umfassen: Ein Ermitteln des Haarschädigungsgrades des Nutzers vor der Haarbehandlung und/oder ein Ermitteln des Haarfarbtons des Nutzers vor der Haarbehandlung, ein Vergleichen des ermittelten Haarschädigungsgrades mit mindestens einem einer Mehrzahl von in dem Speicher hinterlegten Haarschädigungsgraden und/oder ein Vergleichen des ermittelten Haarfarbtons mit mindestens einem einer Mehrzahl von in dem Speicher hinterlegten Haarfarbtönen, ein Ermitteln eines ähnlichsten hinterlegten Haarschädigungsgrades und/oder eines ähnlichsten hinterlegten Haarfarbtons in dem Speicher, und ein Bereitstellen eines basierend auf dem jeweils ermittelten ähnlichsten hinterlegten Haarschädigungsgrad und/oder auf dem ermittelten ähnlichsten hinterlegten Haarfarbton und/oder einer vorbestimmten Wunschhaarfarbe vorhergesagten Haarfarbtons.

So kann durch einen Vergleich eines Haarzustandes nach einer Haarbehandlung mit einem vorhergesagten Haarzustand eine Rückkopplung über eine Qualität oder Effektivität eines kosmetischen Haarbehandlungsproduktes unter realen Bedingungen erhalten werden kann.

In verschiedenen Ausführungsbeispielen kann das Verfahren ferner ein Darstellen eines vorhergesagten Haarfarbtons mittels einer Anzeigevorrichtung umfassen.

Ein Nutzer kann auf einfache und überzeugende Weise über Haarzustände nach einer Haarbehandlung informiert werden. Dadurch kann der Nutzer in seiner Findungsphase und Entscheidung unterstützt und zu einer Anwendung eines kosmetischen Haarpflegproduktes bestärkt werden.

In verschiedenen Ausführungsbeispielen kann das Aktualisieren mindestens ein Aktualisieren eines Haarfarbtons und/oder eines Haarschädigungsgrades in dem Speicher umfassen.

Es kann erreicht werden, dass ein mittels des kosmetischen Beratungssystems vorhergesagter Haarfarbton genauer vorhergesagt werden kann. Dadurch wird eine verbesserte Qualität des Kosmetikberatungssystems erzielt.

In verschiedenen Ausführungsbeispielen kann eine Effektivitätssteigerung des Kosmetikberatungssystems erreicht werden.

In verschiedenen Ausführungsbeispielen kann mittels des kosmetischen Beratungssystems die Genauigkeit der Haarfarbtonprognosen durch ein Ersetzen vorheriger Haarfarbwerte durch weiter optimierte Haarfarbwerte erreicht werden.

Die oben beschriebenen Ausgestaltungen und genannten Vorteile beziehen sich auf das System und das Verfahren.

Ausführungsbeispiele der Erfindung sind in den Figuren dargestellt und werden im Folgenden näher erläutert.

Es zeigen
Figur 1 eine schematische Darstellung eines Systems zum Verwalten von Haarzustandsinformation gemäß verschiedenen Ausführungsbeispielen;
Figur 2 eine schematische Darstellung eines Systems zum Verwalten von Haarzustandsinformation gemäß verschiedenen Ausführungsbeispielen;
Figur 3 eine schematische Darstellung eines Systems zum Verwalten von Haarzustandsinformation gemäß verschiedenen Ausführungsbeispielen;
Figur 4 eine schematische Darstellung von Teilkomponenten eines Systems zum Verwalten von Haarzustandsinformation gemäß verschiedenen Ausführungsbeispielen;
Figur 5 ein Ablaufdiagramm, welches ein Verfahren zum Optimieren eines kosmetischen Beratungssystems gemäß verschiedenen Ausführungsbeispielen veranschaulicht.

In der folgenden ausführlichen Beschreibung wird auf die beigefügten Zeichnungen Bezug genommen, die Teil der vorliegenden Anmeldung bilden und in denen zur Veranschaulichung spezifische Ausführungsbeispiele gezeigt sind, in denen die Erfindung ausgeübt werden kann.

In dieser Hinsicht wird eine Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsbeispielen in einer Anzahl verschiedener Orientierungen positioniert werden können, dient die Richtungsterminologie zur Veranschaulichung und ist auf keinerlei Weise einschränkend. Es versteht sich von selbst, dass andere Ausführungsbeispiele benutzt und strukturelle oder logische Änderungen vorgenommen werden können, ohne von dem Schutzumfang der vorliegenden Erfindung abzuweichen.

Ferner versteht sich von selbst, dass die Merkmale der hierin beschriebenen verschiedenen beispielhaften Ausführungsbeispiele miteinander kombiniert werden können, sofern nicht spezifisch anders angegeben.

Die folgende ausführliche Beschreibung ist deshalb nicht in einschränkendem Sinne aufzufassen, und der Schutzumfang der vorliegenden Erfindung wird durch die angefügten Ansprüche definiert.

Unter einem digitalen Bild kann hierin ein Datenpaket verstanden werden, welches von einem Datenverarbeitungssystem als zweidimensionale (flächige) Anordnung von Bildpunkten darstellbar ist, beispielsweise in einem Koordinatensystem, welches eine x-Achse und eine y-Achse aufweist, wobei jedem Bildpunkt zumindest eine Farbinformation zugeordnet ist, welche beispielsweise als Farbe eines Pixels eines Monitors oder eines gedruckten Punktes eines ausgedruckten Bilds darstellbar ist. Dabei kann das digitale Bild beispielsweise ein mit einer Digitalkamera aufgenommenes Foto oder ein Einzelbild einer mit einer digitalen Kamera aufgenommenen Videosequenz sein.

Die Begriffe Haarbereich und Haarbereichsfläche werden hierin synonym verwendet. Der Haarbereich kann eine Mehrzahl von Bildpunkten eines digitalen Bildes aufweisen, welche Haar abbilden und welche eine zusammenhängende oder aus einer Mehrzahl von Einzelflächen bestehende Fläche bilden können. Eine Ebene, in welcher der Haarbereich angeordnet sein kann, kann beispielsweise durch die x-Achse und die y-Achse des digitalen Bildes bestimmt sein.

Unter einer "Farbe" kann hierin ein Zusammenwirken eines Farbtons (d.h. eines spektralen Farbeindrucks, auch als Buntton bezeichnet, was als das verstanden werden kann, was als die "eigentliche Farbe" angesehen wird), einer Farbintensität (d.h. wie intensiv die Farbe erscheint, z.B. verglichen mit einem neutralen Grau, was auch als Sättigung, Farbsättigung, Buntheit, Chromatizität oder Farbtiefe bezeichnet wird) und einer Helligkeit (d.h. wie hell oder dunkel die Farbe erscheint) verstanden werden.

In verschiedenen Ausführungsbeispielen kann die Farbinformation beispielsweise eine Parametrisierung in einem bekannten Farbraum aufweisen, beispielsweise in einem L*a*b*-Farbraum (wobei L* die Helligkeit einer Farbe angibt, a* den Grün- und Rotanteil und b* den Blau- und Gelbanteil der Farbe), in einem RGB-Farbraum durch Farbanteile in Rot, Grün und Blau, in einem CMYK-Farbraum durch Farbanteile in Cyan, Magenta, Gelb und Schwarz, oder in einem beliebigen anderen Farbraum.

Unter dem Begriff "Farbton" kann hierin ein Farbwert oder der spektrale Farbeindruck einer Farbe verstanden werden, unabhängig davon, wie dieser parametrisiert sein kann, beispielsweise als ein Punkt in einem zweidimensionalen Farbraum (z.B. a*b* des L*a*b*-Systems) oder ein Verhältnis von Farbanteilen (wie z.B. beim RGB-Farbraum oder beim CMYK-Farbraum).

In verschiedenen Ausführungsbeispielen kann ein Farbraum, dem die Farbinformation (Haarfarbinformation und Bildfarbinformation) entstammt, so beschaffen sein, dass eine ermittelte oder dargestellte Farbe unabhängig von einem Medium ist, durch welches die Farbe ermittelt oder dargestellt wird (z.B. Bildschirm, Drucker, Scanner, menschliches Auge, usw.). Der Farbraum kann beispielsweise ein L*a*b*-Farbraum sein, die Farbinformation ein beispielsweise mittels a* und b* parametrisierter Farbton. Die einheitliche Darstellung in dem mediumunabhängigen Farbraum ermöglicht es, ein realitätsnahes zu erwartendes Färbeergebnis zu präsentieren.

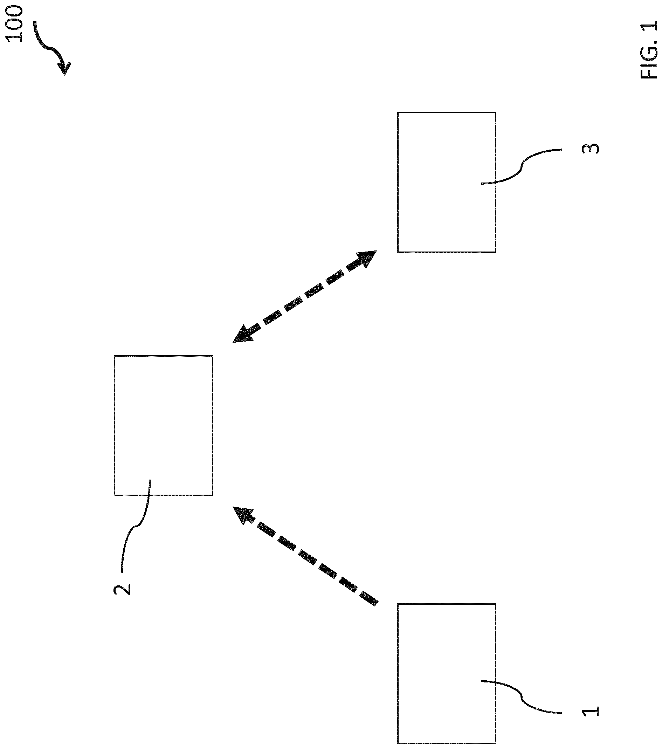

Figur 1 ist eine schematische Darstellung eines Systems 100 zum Verwalten von Haarzustandsinformation gemäß verschiedenen Ausführungsbeispielen.

Das System zum Verwalten von Haarzustandsinformation kann gemäß verschiedenen Ausführungsbeispielen einen Sensor 1 umfassen. Der Sensor 1 kann ein "Two-in-one"-Sensor oder ein Zwei-in-Einem-Sensor sein, der einen NIR-Sensor und eine Kamera umfassen kann. Der Sensor 1 kann ferner ein Farbkalibriermittel in Form einer Farbkalibrierkarte umfassen. Auf der Farbkalibrierkarte können Kalibrierfarben aufgebracht sein. Mittels des NIR-Sensors kann eine innere Haarschädigung oder ein Haarschädigungsgrad analysierbar sein. Mittels der Kamera und der Farbkalibrierkarte kann ein realitätsgetreuer Haarfarbton eines Nutzers ermittelt werden.

Alternativ kann der Zwei-in-Einem-Sensor ein VIS-Sensor und einen NIR-Sensor oder einen NIR-Sensor und ein Photometer umfassen.

Ferner kann das System zum Verwalten von Haarzustandsinformation einen Speicher 2 umfassen. Der Speicher 2 kann ein Big-Data-KNIME-Server sein. Mittels der Verwendung des KNIME-Servers kann mittels einer grafischen Benutzeroberfläche ein einfaches und schnelles Aneinandersetzen von Modulen für die Datenvorverarbeitung von Kundendaten realisiert werden. Mittels einer Anwendung eines KNIME-Servers und einer Big Data-Analyse können beispielsweise neue Querverbindungen und Trends im Bereich der Haarbehandlungsproduktindustrie ermittelt werden.

Ferner kann das System zum Verwalten von Haarzustandsinformation gemäß verschiedenen Ausführungsbeispielen einen Prozessor 3 umfassen. Der Prozessor 3 kann als Rechenwerk eingerichtet sein, um Information oder Daten in den Speicher 2 zu schreiben oder Information oder Daten aus dem Speicher 2 zu lesen.

Der Sensor 1 kann mit dem Speicher 2 mittels einer drahtlosen Verbindung verbunden sein. Die Verbindung zwischen dem Sensor 1 und dem Speicher 2 kann in verschiedenen Ausführungsformen drahtgebunden realisiert sein. Ferner kann der Prozessor 3 mit dem Speicher 2 mittels einer drahtlosen Verbindung verbunden sein. Die Verbindung zwischen dem Speicher 2 und dem Prozessor 3 kann in verschiedenen Ausführungsformen drahtgebunden realisiert sein.

Das System 100 zum Verwalten von Haarzustandsinformation gemäß verschiedenen Ausführungsbeispielen kann einen Prozessor 3 vorsehen, der Information oder Daten von dem Sensor 1 drahtlos empfangen kann und diese Daten beispielsweise an den Speicher 2 weiterleiten und in dem Speicher 2 speichern kann. Ferner kann gemäß verschiedenen Ausführungsbeispielen vorgesehen sein, dass der Prozessor 3 in dem Speicher 2 vorgesehen ist. Eine drahtlose Verbindung zwischen dem Sensor 1, dem Speicher 2 und dem Prozessor 3 kann beispielsweise mittels einer WLAN-, Thread-, ZigBee-, NFC-, Wibree- oder Bluetooth-Verbindung realisiert sein. Die Erfindung ist jedoch nicht darauf beschränkt und es ist jede geeignete Funkverbindung realisierbar.

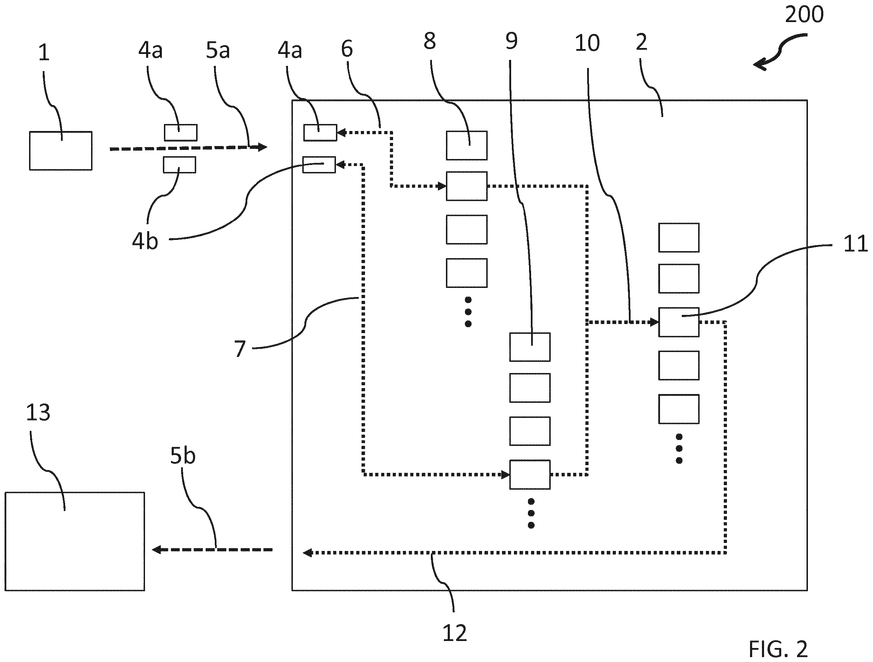

Figur 2 zeigt eine schematische Darstellung eines Systems 200 zum Verwalten von Haarzustandsinformation gemäß verschiedenen Ausführungsbeispielen.

Mittels des Sensors 1 kann ein Haarschädigungsgrad 4a beispielsweise mittels eines NIR-Sensors und/oder ein Haarfarbton 4b beispielsweise mittels einer Kamera und einem Farbkalibriermittel ermittelt werden. Dazu kann ein Nutzer selbst oder ein Friseur den Sensor 1 verwenden, um damit einen Haarschädigungsgrad 4a und/oder einen Haarfarbton 4b eines Nutzers vor einer Haarbehandlung zu erfassen. Über eine Drahtlosverbindung 5a kann beispielsweise der Haarschädigungsgrad 4a eines Nutzers und/oder der Haarfarbton 4b eines Nutzers zu dem Speicher 2 übertragen werden.

In dem Speicher 2 kann beispielsweise ein Vergleich 6 eines Haarschädigungsgrades 4a mit einem in dem Speicher 2 hinterlegten Haarschädigungsgrad 8 einer Mehrzahl von hinterlegten Haarschädigungsgraden durchgeführt werden. Derjenige Haarschädigungsgrad von einer Mehrzahl von in dem Speicher 2 gespeicherten Haarschädigungsgraden 8, der dem mittels des Sensors 1 ermittelten Haarschädigungsgrades 4a am nächsten kommt, kann mittels eines Prozessors ermittelt werden und beispielsweise in dem Speicher 2 oder in dem Prozessor zwischengespeichert werden.

In dem Speicher 2 kann beispielsweise ein Vergleich 7 eines Haarfarbtons 4b mit einem in dem Speicher 2 hinterlegten Haarfarbton einer Mehrzahl von hinterlegten Haarfarbtönen 9 durchgeführt werden. Derjenige Haarfarbton von einer Mehrzahl von in dem Speicher 2 gespeicherten Haarfarbtönen 9, der dem mittels des Sensors 1 ermittelten Haarfarbton 4b am nächsten kommt, kann mittels des Prozessors ermittelt werden und beispielsweise in dem Speicher 2 oder im Prozessor zwischengespeichert werden.

Nach einer Ermittlung eines aktuellen Haarschädigungsgrades 4a und/oder eines aktuellen Haarfarbtons 4b des Nutzers mittels des Sensors 1 kann der Nutzer oder der Friseur aus einer Mehrzahl von in dem Speicher 2 hinterlegten Wunschhaarfarbtönen 11 wählen. Basierend auf einem Ergebnis 10 bestehend aus dem ermittelten Haarschädigungsgrad 8 und dem ermittelten Haarfarbton 10 sowie einem von dem Nutzer ausgewählten Wunschhaarfarbton 11, kann eine Haarfarbtonvorhersage 12, beispielsweise in Form eines Bildes des Gesichts des Nutzers mit der ausgewählten Wunschhaarfarbe, bereitgestellt werden.

Die Haarfarbtonvorhersage 12 kann beispielsweise über eine drahtlose Verbindung 5b an eine Anzeigevorrichtung 13 übertragen werden. Auf der Anzeigevorrichtung 13 kann basierend auf der Haarfarbtonvorhersage 12 eine grafische Wiedergabe des Bildes dem Nutzer dargestellt werden. Die Anzeigevorrichtung 13 kann beispielsweise ein Bildschirm eines Smartphones, ein Bildschirm eines Tablets oder ein Smart Mirror sein. Jedoch ist die vorliegende Erfindung nicht darauf beschränkt und weitere geeignete Anzeigevorrichtungen können realisierbar sein.

Wird beispielsweise nach einer Haarbehandlung eines Nutzers festgestellt, dass ein vorhergesagter Haarzustand eine große Abweichung von einem nach einer Haarbehandlung mittels des Sensors 1 ermittelten Haarzustands aufweist, so kann mittels des Prozessors die Haarfarbtonvorhersage 12 entsprechend angepasst werden. Durch die Anpassung oder Aktualisierung der Haarfarbtonvorhersage 12 kann das System hin zu einer genaueren Prognose einer vorhergesagten Haarfarbe optimiert werden. Mindestens eine in dem Speicher 2 hinterlegte Haarzustandsinformation kann aktualisiert werden, um eine bessere Haarfarbtonvorhersage 12 treffen zu können.

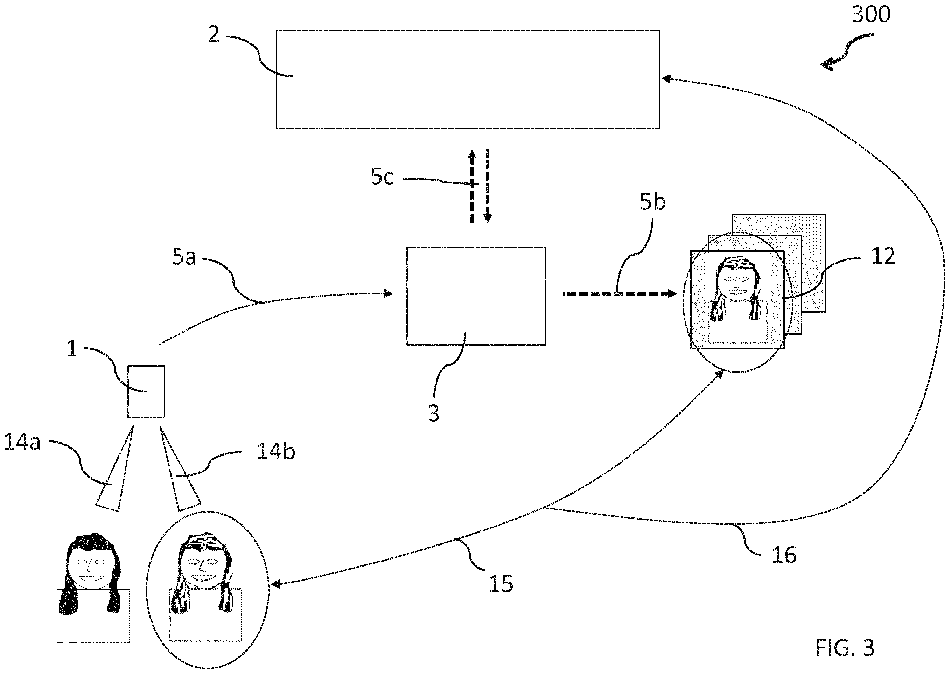

Figur 3 zeigt eine schematische Darstellung eines Systems 300 zum Verwalten von Haarzustandsinformation gemäß verschiedenen Ausführungsbeispielen.

Das System 300 kann die Merkmale der in Bezug auf die Figuren 1 und 2 beschriebenen Systeme 100 und 200 umfassen.

Bei dem in Bezug auf die Figur 3 beschriebenen System 300 kann ein Sensor 1 mit einem Prozessor 3 über eine drahtlose Verbindung 5a in Kontakt stehen und Information oder Daten an den Prozessor 3 senden. Ferner kann der Prozessor 3 über eine drahtlose Verbindung 5c Information oder Daten mit einem Speicher 2 austauschen.

Bei dem System 300 kann mittels einer Sensorhaarzustandsaufnahme 14a vor einer Haarbehandlung eines Nutzers eine Haarzustandsinformation mittels des Sensors 1 ermittelt werden. Der Sensor 1 kann einen NIR-Sensor umfassen. Zumindest ein Haarbereich des Nutzers wird mittels des NIR-Sensors vor einer Haarbehandlung erfasst. Die mittels des NIR-Sensors erfasste Haarzustandsinformation kann mit einer Mehrzahl von Haarinformationszuständen, die in dem Speicher 2 oder einem weiteren nicht in Figur 3 dargestellten Speicher abgespeichert sind, abgeglichen werden.

Mittels des NIR-Sensors können aus den Absorptionsspektren beispielsweise verschiedene Bestandteile oder Inhaltsstoffe des Haars qualitativ oder quantitativ bestimmt werden. Das jeweilige Absorptionsspektrum oder das jeweilige Reflexionsspektrum kann mittels eines in dem Speicher 2 hinterlegten Absorptionsspektrums oder Reflexionsspektrums verglichen werden und ein übereinstimmendes Absorptionsspektrum oder Reflexionsspektrum in dem Speicher 2 beispielsweise unter Verwendung des Prozessors 3 ermittelt werden. Dem übereinstimmenden ermittelten Spektrum sind beispielsweise bestimmte Eigenschaften von Haar zugeordnet, beispielsweise ein Wasseranteil im Haar, einen Aminosäure-Gehalt, einen Lipidanteil im Haar, eine chemische Zusammensetzung des Haars, etc. Nach Erfassen des Haars des Nutzers vor einer Haarbehandlung kann basierend auf hinterlegten Daten folglich eine Auskunft über den Haarzustand des jeweiligen Nutzers gegeben werden.

Ferner kann mittels des Sensors 1 mit einer Kamera und einer Farbkalibrierkarte eine Haarfarbtoninformation jeweils vor einer Haarbehandlung und nach einer Haarbehandlung präzise erfasst werden. Nach einer jeweiligen Messung mittels des Sensors 1 kann ein Paar von Messdaten, beispielsweise ein Haarschädigungsgrad des Nutzers und ein Haarfarbton des Nutzers, ermittelt werden. In verschiedenen Ausführungsformen können die Messdaten unabhängig voneinander gemessen werden. Die Daten können in dem Speicher 2 dem jeweiligen Nutzer zugeordnet und gespeichert werden.

Gemäß verschiedenen Ausführungsformen kann beispielsweise zuerst eine Haarzustandsinformation vor einer Haarbehandlung mittels des Sensors 1 ermittelt werden und die ermittelte Information in den Speicher gespeichert werden. Dann kann beispielsweise eine vorhergesagte Haarzustandsinformation bereitgestellt werden. Dann kann beispielsweise eine Haarzustandsinformation nach einer Haarbehandlung mittels des Sensors 1 ermittelt werden und in den Speicher gespeichert werden. Basierend auf der vorhergesagten Haarzustandsinformation und der nach der Haarbehandlung ermittelten Haarzustandsinformation in dem Speicher 2 kann ein Vergleich mittels des Prozessors 3 durchgeführt werden. Jedoch ist die vorliegende Erfindung nicht darauf beschränkt und es ist für den Fachmann selbstverständlich, dass auch andere Reihenfolgen realisierbar sind.

Der Nutzer kann aus einer Mehrzahl von möglichen Haarfarbwerten, beispielsweise aus einer Haarfarbpalette, einen oder eine Mehrzahl von Zielhaarfarben auswählen, beispielsweise Haarfarbtöne, in denen er sich seine Haare färben oder bleichen lassen möchte. Basierend auf dem ermittelten Haarschädigungsgrad des Nutzers, dem mittels des Sensors 1 ermittelten Haarfarbton des Nutzers und dem vom dem Nutzer ausgewählten Wunschhaarfarbton oder den Wunschhaarfarbtönen kann der Prozessor 3 ein vorhergesagtes Haarfarbtonbild oder eine Mehrzahl von vorhergesagten Haarfarbtonbilder 12 erzeugen. Das mindestens eine erzeugte vorhergesagte Haarfarbtonbild 12 kann beispielsweise mittels einer Drahtlosverbindung 5b auf einer Anzeigevorrichtung dargestellt werden. Das mindestens eine vorhergesagte Haarfarbtonbild 12 kann beispielsweise auf einer Anzeigevorrichtung mit einem von Haar des Nutzers aufgenommenen Bild vor einer Haarbehandlung überlagert werden und beispielsweise mittels digitaler Bildbearbeitung kombiniert werden.

Der Prozessor 3 kann die in dem Speicher hinterlegte personenspezifische Information oder hinterlegten personenspezifischen Daten aktualisieren. Das Aktualisieren der personenspezifischen Information kann beispielsweise ein Überschreiben vorheriger gespeicherter Haarzustandsinformation umfassen. Der Prozessor 3 kann das Überschreiben vorheriger gespeicherter Haarzustandsinformation beispielsweise für jeden Nutzer durchführen. So kann der Prozessor 3 beispielsweise einen bei einer vorherigen Haarzustandsmessung ermittelten Haarschädigungsgrad durch einen später gemessenen Haarschädigungsgrad im Speicher ersetzen. Der Prozessor 3 kann beispielsweise einen bei einer vorherigen Haarzustandsmessung ermittelten Haarfarbton durch einen später gemessenen Haarfarbton im Speicher ersetzen.

Ein Ermitteln einer Haarzustandsinformation, beispielsweise ein Haarschädigungsgrad und ein Haarfarbton des Nutzers, mittels einer Sensorhaarzustandsaufnahme 14b nach einer Haarbehandlung kann wie in Bezug auf das beschriebene Ermitteln der Haarzustandsinformation vor einer Haarbehandlung durchgeführt werden. Der nach einer Haarbehandlung eines Nutzers ermittelte Haarzustand, beispielsweise ein Haarschädigungsgrad und/oder ein Haarfarbton, kann/können mittels des Prozessors 3 in dem Speicher 2 für jeden Nutzer archiviert oder gespeichert werden.

Das System 300 kann mittels des Prozessors 2 einen Vergleich zwischen einem Haarzustand vor einer Haarbehandlung und zwischen einem Haarzustand nach einer Haarbehandlung durchführen, um beispielsweise die Genauigkeit des vorhergesagten oder prognostizierten oder zukünftigen Haarzustands zu verbessern. So kann beispielsweise ein Haarfarbton vor und nach einer Behandlung verglichen werden und/oder beispielsweise ein Haarschädigungsgrad vor und nach einer Haarbehandlung verglichen werden.

Ferner kann das System 300 mittels des Prozessors 3 einen Vergleich zwischen einem Haarzustand nach einer Haarbehandlung mit einem vor der Haarbehandlung bereitgestellten vorhergesagten oder prognostizierten oder zukünftigen Haarzustand vergleichen, so wie es durch das Bezugszeichen 15 in der Figur 3 schematisch veranschaulicht ist. So kann beispielsweise ein Haarfarbton nach einem Färben oder Bleichen der Haare mit einem zuvor vorhergesagten Haarfarbton verglichen werden.

Ferner kann beispielsweise ein Haarschädigungsgrad nach einer Haarbehandlung mit einem kosmetischen Haarbehandlungsmittel, beispielsweise mit einem Haarshampoo, einer Haarmaske, einem Haarfärbemittel oder einem Haaröl, mit einem vorhergesagten Haarschädigungsgrad vor der Haarbehandlung verglichen werden.

Aus den miteinander verglichenen Werten, beispielsweise Haarfarbtönen oder Haarfarbtonwerten und/oder Haarschädigungsgraden oder Haarschädigungszuständen, kann jeweils eine Differenz ermittelt oder berechnet werden. Die Differenz kann sich beispielsweise durch ein Subtrahieren eines Wertes von dem jeweiligen anderen Wert ergeben. Beispielsweise kann ein ermittelter Haarzustand nach einer Haarbehandlung von dem vorhergesagten Haarzustand vor der Haarbehandlung abgezogen werden. Gemäß verschiedenen Ausführungsbeispielen kann beispielsweise ein vorhergesagter Haarzustand vor der Haarbehandlung von einem ermittelten Haarzustand nach einer Haarbehandlung abgezogen werden.

Mindestens eine Haarzustandsinformation aus einer Mehrzahl von Haarzustandsinformationen kann in dem Speicher 2 durch eine Haarfarbtonvorhersageaktualisierung 16 um einen jeweils ermittelten Unterschied oder eine jeweils ermittelte Differenz erniedrigt oder erhöht werden. Beispielsweise kann ein Abändern eines Speicherwertes um einen Unterschied, der sich beispielsweise aus einem Vergleich zwischen der vorhergesagten Haarzustandsinformation und der realen Haarzustandsinformation nach einer Haarbehandlung ergibt, ein Erhöhen oder ein Erniedrigen des jeweiligen Speicherwertes in dem Speicher 2 umfassen. So kann beispielsweise ein Speicherwert in einer Speicherzelle der Datenbank auf beispielsweise einem Server, einer Cloud etc. durch eine Subtraktionsfunktion um einen vordefinierten Wert erniedrigt oder durch eine Additionsfunktion um einen vordefinierten Wert erhöht werden. Der um die ermittelte Differenz erniedrigte Wert oder der um die ermittelte Differenz erhöhte Wert kann in dem Speicher beispielsweise in einer anderen Speicherzelle gespeichert werden oder in der ursprünglichen Speicherzelle abgespeichert werden, wobei der vorherige Speicherwert überschrieben werden kann.

Folglich kann ein System ermöglicht werden, das durch einen Vergleich vorhergehender mit nachkommenden Werten einen internen Algorithmus oder ein internes Berechnungsmodell, beispielsweise zum Ermitteln vorhergesagter Haarzustände, verbessern kann. Der Algorithmus kann beispielsweise in einem Quellcode realisiert sein. Das System kann mit zunehmender Zeit oder mit einer Erhöhung der Anzahl von Vorher-Nachher-Haarzustandsermittlungen an Genauigkeit gewinnen. Das System kann somit ein mit der Zeit hinzulernendes Beratungssystem darstellen. Durch das mit der Zeit hinzulernende System 300 und die Genauigkeitszunahme kann eine genauere Prognose für den Nutzer und folglich eine höhere Nutzer- oder Kundenzufriedenheit nach der Anwendung von kosmetischen Pflegemitteln und eine Effektivitätssteigerung des Systems 300 erzielt werden.

Ferner kann das System 300 zum Sammeln nutzerbasierter Haarzustandsinformation eingesetzt werden. So können Vorlieben eines Nutzers oder einer Mehrzahl von Nutzern im Bereich Haarfarbtöne, kosmetischer Haarbehandlungsprodukte für die Anwendung bei Haarschädigungen etc. aus den in dem Speicher abgespeicherten Historie-Daten abgeleitet werden. Auch kann die in dem Speicher 2 gespeicherte Haarzustandsinformation für statistische Auswertungen zur Verfügung stehen. Durch eine Datenanalyse kann ein größtmöglicher Nutzen für den Nutzer gezogen werden.

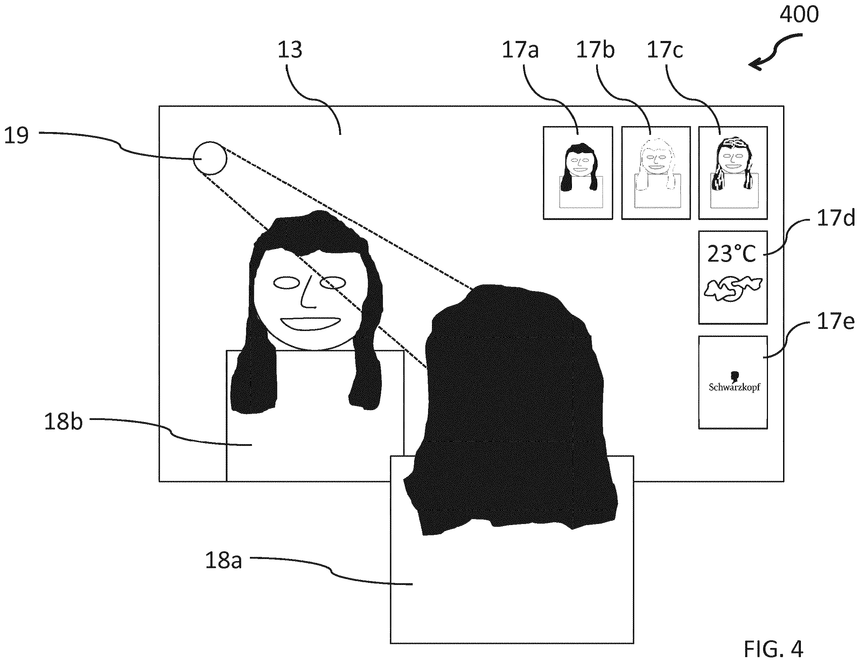

Figur 4 zeigt eine schematische Darstellung von beispielhaften Teilkomponenten 400 eines Systems 100, 200, 300 zum Verwalten von Haarzustandsinformation gemäß verschiedenen Ausführungsbeispielen.

Die oben beschriebenen Systeme 100, 200 und 300 können beispielsweise Teilkomponenten 400 umfassen, so wie es schematisch in der Figur 4 veranschaulicht ist. In verschiedenen Ausführungsbeispielen kann als eine Anzeigevorrichtung 13, beispielsweise in einem professionellen Haarstudio, ein Smart Mirror verwendet werden. Der Smart Mirror kann eine Kombination aus einem herkömmlichen Spiegel und einem digitalen Bildschirm umfassen. Der herkömmliche Spiegel und der digitale Bildschirm können überlagert sein. Der herkömmliche Spiegel kann von einem Nutzer 18a ein verzögerungsfreies Spiegelbild 18b abbilden, so wie in der Figur 4 schematisch veranschaulicht ist. Der digitale Bildschirm kann eingerichtet sein, mindestens eine Information 17 dem herkömmlichen Spiegel überlagert anzuzeigen. So wie in der Figur 4 schematisch veranschaulicht ist, kann die Information beispielsweise mindestens eine vorhergesagte nutzerspezifische Haarzustandsinformation 17a, 17b, 17c, beispielsweise mindestens ein vorhergesagter Haarfarbton oder mindestens ein Abbild des Kopfes eines Nutzers mit einem vorhergesagten Haarfarbton, umfassen. So kann beispielsweise eine nutzerspezifische Haarzustandsinformation 17a einen dunkleren Haarfarbton, eine nutzerspezifische Haarzustandsinformation 17b einen helleren Haarfarbton und eine nutzerspezifische Haarzustandsinformation 17c eine Kombination aus aufgehellten und dunklen Haarfarbtönen, beispielsweise Strähnchen, umfassen.

Ferner kann der Smart Mirror für den Nutzer interessante Information wie beispielsweise eine Wetterinformation 17d oder allgemeine oder personalisierte Werbung 17e darstellen. Die Werbung kann insbesondere Neuigkeiten in den Bereichen Haarbehandlung oder Mode umfassen. Ferner kann der Smart Mirror dazu verwendet werden, um interaktiv ein kosmetisches Haarbehandlungsprodukt wie beispielsweise ein Haarshampoo, eine Haarkur, ein Haarfärbemittel, eine Haarmaske oder ein Haaröl etc. darzustellen, welches nach einer Auswahl durch den Nutzer individuell für den Nutzer zusammengemischt werden kann. Die mittels des Smart Mirrors dargestellten Informationen 17a bis 17e können auf den jeweiligen Nutzer abgestimmt sein. So kann sich beispielsweise die Wetterinformation 17d auf den aktuellen Standort des Nutzers beziehen. Die personalisierte Werbung 17e kann beispielsweise abhängig von den Wetterdaten ein kosmetisches Haarbehandlungsprodukt vorschlagen. So können beispielsweise bei sonnigem Wetter Haarbehandlungsprodukte mit UV-Schutz vorgeschlagen werden.

In verschiedenen Ausführungsbeispielen kann der Smart Mirror ferner eine Gesichtserkennungskamera 19 zum Erkennen mindestens eines Gesichts von einer Mehrzahl von in dem Speicher 3 gespeicherten Nutzern umfassen. Mittels der Gesichtserkennungskamera 19 kann vor einer Beratung eines Nutzers 18a durch Erfassen eines Gesichtsbereiches des Nutzers 18a eine Identifizierung des Nutzers realisiert werden. Die Kamera 19 kann mittels geläufigen Verfahren zum Erfassen von Personen anhand des Gesichts der Person eine Identifizierung der jeweiligen Person, die sich beispielsweise vor dem Smart Mirror befindet, durchführen. Nach der Gesichtserkennung können nutzerspezifische Informationen mittels des Smart Mirrors angezeigt werden.

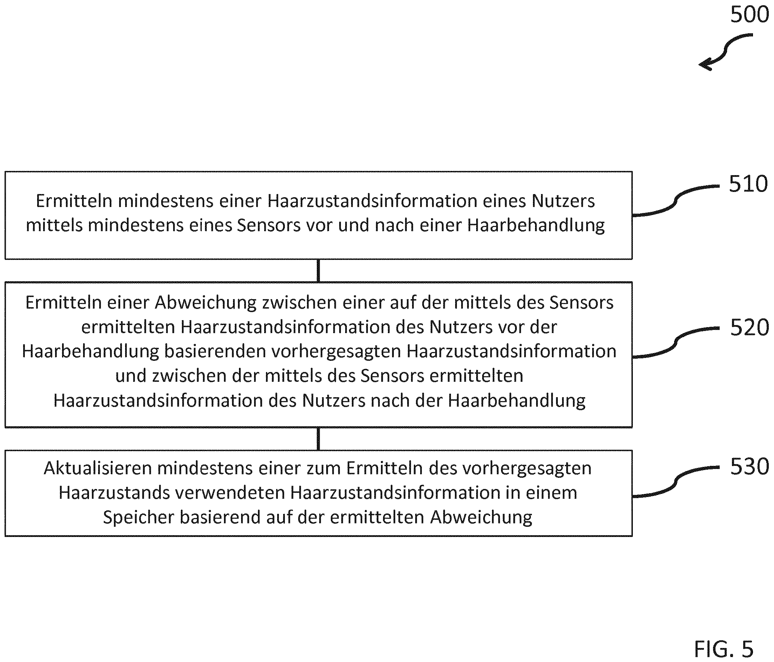

Figur 5 zeigt ein Ablaufdiagramm, welches ein Verfahren 500 zum Optimieren eines kosmetischen Beratungssystems gemäß verschiedenen Ausführungsbeispielen umfasst.

Das Verfahren 500 kann ein Ermitteln 510 mindestens einer Haarzustandsinformation eines Nutzers mittels mindestens eines Sensors vor und nach einer Haarbehandlung umfassen. Das Verfahren kann ferner ein Ermitteln 520 einer Abweichung zwischen einer vorhergesagten Haarzustandsinformation basierend auf der ermittelten Haarzustandsinformation des Nutzers vor der Haarbehandlung und zwischen der ermittelten Haarzustandsinformation des Nutzers nach der Haarbehandlung umfassen. Das Verfahren kann ferner ein Aktualisieren 530 mindestens einer zum Ermitteln des vorhergesagten Haarzustands verwendeten Haarzustandsinformation in einem Speicher basierend auf der ermittelten Abweichung umfassen.

## Patentansprüche

1. System zum Verwalten von Haarzustandsinformation, aufweisend:
• mindestens einen Sensor (1) zum Ermitteln einer Haarzustandsinformation eines Nutzers, wobei die Haarzustandsinformation einen Haarschädigungsgrad und einen Haarfarbton umfasst;
• einen Speicher (2), wobei der Speicher (2) eingerichtet ist, zumindest die Haarzustandsinformation zu speichern; und
einen Prozessor (3), wobei der Prozessor (3) eingerichtet ist, einen mittels des Sensors (1) erfassten Haarschädigungsgrad des Nutzers vor der Haarbehandlung mit einer Mehrzahl von in dem Speicher (2) hinterlegten Haarschädigungsgraden zu vergleichen und einen mittels des Sensors (1) erfassten Haarfarbton des Nutzers vor der Haarbehandlung mit einer Mehrzahl von in dem Speicher (2) hinterlegten Haarfarbtönen zu vergleichen, einen in dem Speicher (2) hinterlegten ähnlichsten Haarschädigungsgrad und ähnlichsten Haarfarbton zu ermitteln, und
• basierend auf dem jeweils ermittelten ähnlichsten Haarschädigungsgrad und dem ermittelten ähnlichsten Haarfarbton und einer Wunschhaarfarbe des Nutzers einen vorhergesagten Haarzustand und vorhergesagten Haarfarbton bereitzustellen, wobei der Prozessor ferner eingerichtet ist zumindest eine Haarzustandsinformation in dem Speicher (2) basierend auf einer Abweichung einer mittels des Sensors (1) ermittelten Haarzustandsinformation eines Nutzers nach einer Haarbehandlung von einer vorhergesagten Haarzustandsinformation des Nutzers zu aktualisieren, und einen bei einer vorherigen Haarzustandsmessung ermittelten Haarschädigungsgrad und einen bei einer vorherigen Haarzustandsmessung ermittelten Haarfarbton durch einen später gemessenen Haarschädigungsgrad und einen später gemessenen Haarfarbton im Speicher ersetzen.

2. System gemäß Anspruch 1,
wobei der Sensor (1) einen Nahinfrarotspektroskopie-Sensor (NIR-Sensor) und/oder eine Kamera und ein Farbkalibriermittel umfasst.

3. System gemäß Anspruch 1,
wobei der Sensor (1) einen Nahinfrarotspektroskopie-Sensor (NIR-Sensor) und/oder ein Photometer umfasst.

4. System gemäß Anspruch 1,
wobei der Sensor (1) einen Nahinfrarotspektroskopie-Sensor (NIR-Sensor) und/oder ein Sensor für sichtbares Licht (VIS-Sensor) umfasst.

5. System gemäß einem der Ansprüche 1 bis 4,
wobei das System ferner eine Anzeigevorrichtung (3) zum Darstellen von zumindest auf der in dem Speicher (2) gespeicherten Haarzustandsinformation basierenden Information umfasst.

6. System gemäß Anspruch 5,
wobei der Sensor (1) in einer mobilen Einrichtung realisiert ist, und wobei die Anzeigevorrichtung (3) in der mobilen Einrichtung und/oder in einem Smart Mirror realisiert ist.

7. System gemäß Anspruch 6,
wobei ein Informationsaustausch zwischen der mobilen Einrichtung und dem Speicher (2) mittels einer Anwendung (App) realisiert ist.

8. System gemäß Anspruch 1,
wobei der Prozessor ferner eingerichtet ist, eine Abweichung zwischen einem vor einer Haarbehandlung mittels des Sensors (1) ermittelten Haarfarbton oder einem vor einer Haarbehandlung vorhergesagten Haarfarbton zu einem nach einer Haarbehandlung mittels des Sensors (1) ermittelten Haarfarbtons durch einen Vergleich jeweils zugehöriger Haarfarbtonwerte zu ermitteln.

9. System gemäß einem der vorherigen Ansprüche,
wobei der Prozessor ferner eingerichtet ist, die mittels des Sensors (1) erfasste Haarzustandsinformation des Nutzers jeweils dem Nutzer in dem Speicher (2) zuzuordnen.

10. Verfahren zum Optimieren eines kosmetischen Beratungssystems, aufweisend:
• Ermitteln mindestens einer Haarzustandsinformation eines Nutzers mittels mindestens eines Sensors (1) vor und nach einer Haarbehandlung, wobei die Haarzustandsinformation einen Haarschädigungsgrad und einen Haarfarbton umfasst;
• Ermitteln einer Abweichung zwischen einer auf der mittels des Sensors ermittelten Haarzustandsinformation des Nutzers vor der Haarbehandlung basierenden vorhergesagten Haarzustandsinformation und zwischen der mittels des Sensors ermittelten Haarzustandsinformation des Nutzers nach der Haarbehandlung; und
• Aktualisieren mindestens einer zum Ermitteln des vorhergesagten Haarzustands verwendeten Haarzustandsinformation in einem Speicher (2) basierend auf der ermittelten Abweichung, wobei das Aktualisieren ein ersetzen der einen bei einer vorherigen Haarzustandsmessung ermittelten Haarschädigungsgrad und einen bei einer vorherigen Haarzustandsmessung ermittelten Haarfarbton durch einen später gemessenen Haarschädigungsgrad und einen später gemessenen Haarfarbton im Speicher umfasst;
• wobei das Ermitteln der vorhergesagten Haarzustandsinformation umfasst:
• Ermitteln des Haarschädigungsgrades des Nutzers vor der Haarbehandlung und Ermitteln des Haarfarbtons des Nutzers vor der Haarbehandlung,
• Vergleichen des ermittelten Haarschädigungsgrades mit mindestens einem einer Mehrzahl von in dem Speicher (2) hinterlegten Haarschädigungsgraden und Vergleichen des ermittelten Haarfarbtons mit mindestens einem einer Mehrzahl von in dem Speicher (2) hinterlegten Haarfarbtönen,
• Ermitteln eines ähnlichsten hinterlegten Haarschädigungsgrades und eines ähnlichsten hinterlegten Haarfarbtons in dem Speicher (2), und
• Bereitstellen eines basierend auf dem jeweils ermittelten ähnlichsten hinterlegten Haarschädigungsgrad und auf dem ermittelten ähnlichsten hinterlegten Haarfarbton und einer vorbestimmten Wunschhaarfarbe vorhergesagten Haarfarbtons.

11. Verfahren gemäß Anspruch 10, wobei das Verfahren ferner ein Vergleichen der mittels des Sensors (1) ermittelten Haarzustandsinformation des Nutzers vor der Haarbehandlung mit der mittels des Sensors (1) ermittelten Haarzustandsinformation des Nutzers nach der Haarbehandlung umfasst.

12. Verfahren nach Anspruch 10, wobei das Aktualisieren mindestens ein Aktualisieren eines Haarfarbtons und/oder eines Haarschädigungsgrades in dem Speicher (2) umfasst.

## Claims

1. A system for managing hair condition information, comprising:
• at least one sensor (1) for determining a user's hair condition information, wherein the hair condition information includes a degree of hair damage and a hair color;
• a memory (2), wherein the memory (2) is designed to store at least the hair condition information; and
a processor (3), wherein the processor (3) is designed to compare a user's degree of hair damage before the hair treatment, detected by means of the sensor (1), with a plurality of degrees of hair damage stored in the memory (2), to compare a user's hair color before the hair treatment, detected by means of the sensor (1), with a plurality of hair colors stored in the memory (2), to determine a most similar degree of hair damage and most similar hair color stored in the memory (2), and
• to provide a predicted hair condition and predicted hair color on the basis of the most similar degree of hair damage determined in each case and the most similar hair color determined and a user's desired hair color, wherein the processor is further designed to update at least one item of hair condition information in the memory (2) on the basis of a deviation of a user's hair condition information after a hair treatment, determined by means of the sensor (1), from a user's predicted hair condition information, and replace a degree of hair damage determined during a previous hair condition measurement and a hair color determined during a previous hair condition measurement with a degree of hair damage measured later and a hair color measured later in the memory.

2. The system according to claim 1,
wherein the sensor (1) comprises a near-infrared spectroscopy sensor (NIR sensor) and/or a camera and a color calibration means.

3. The system according to claim 1,
wherein the sensor (1) comprises a near-infrared spectroscopy sensor (NIR sensor) and/or a photometer.

4. The system according to claim 1,
wherein the sensor (1) comprises a near-infrared spectroscopy sensor (NIR sensor) and/or a visible-light sensor (VIS sensor).

5. The system according to one of claims 1 to 4,
wherein the system further comprises a display device (3) for displaying information based at least on the hair condition information stored in the memory (2).

6. The system according to claim 5,
wherein the sensor (1) is produced in a mobile apparatus, and wherein the display device (3) is produced in the mobile apparatus and/or in a smart mirror.

7. The system according to claim 6,
wherein an exchange of information between the mobile apparatus and the memory (2) is carried out by means of an application (App).

8. The system according to claim 1,
wherein the processor is further designed to determine a deviation between a hair color before a hair treatment, determined by means of the sensor (1), or a hair color predicted before a hair treatment and a hair color after a hair treatment, determined by means of the sensor (1), by comparing associated hair color values in each case.

9. The system according to one of the preceding claims,
wherein the processor is further designed to assign the user's hair condition information detected by means of the sensor (1) to the user in the memory (2).

10. A method for optimizing a cosmetic advice system, comprising:
• determining at least one item of hair condition information of a user by means of at least one sensor (1) before and after a hair treatment, wherein the hair condition information includes a degree of hair damage and a hair color;
• determining a deviation between predicted hair condition information based on the user's hair condition information before the hair treatment, determined by the sensor, and between the user's the hair condition information after the hair treatment, determined by the sensor; and
• updating at least one item of hair condition information used to determine the predicted hair condition in a memory (2) on the basis of the determined deviation, wherein updating comprises replacing a degree of hair damage determined during a previous hair condition measurement and a hair color determined during a previous hair condition measurement with a degree of hair damage measured later and a hair color measured later in the memory;
• wherein determining the predicted hair condition information comprises:
• determining the user's degree of hair damage before the hair treatment and determining the user's hair color before the hair treatment,
• comparing the determined degree of hair damage with at least one of a plurality of degrees of hair damage stored in the memory (2) and comparing the determined hair color with at least one of a plurality of hair colors stored in the memory (2),
• determining a most similar stored degree of hair damage and a most similar stored hair color in the memory (2), and
• providing a predicted hair color based on the most similar stored degree of hair damage determined in each case and on the most similar stored hair color determined and a predetermined desired hair color.

11. The method according to claim 10, wherein the method further comprises comparing the user's hair condition information before the hair treatment, determined by means of the sensor (1), with the user's hair condition information after the hair treatment, determined by means of the sensor (1).

12. The method according to claim 10, wherein updating comprises at least updating a hair color and/or a degree of hair damage in the memory (2).

## Revendications

1. Système permettant de gérer une information concernant l'état des cheveux, présentant :
• au moins un capteur (1) permettant de déterminer une information concernant l'état des cheveux d'un utilisateur, dans lequel l'information concernant l'état des cheveux comprend un degré d'endommagement des cheveux et une teinte des cheveux ;
• une mémoire (2), dans lequel la mémoire (2) est configurée pour mémoriser au moins l'information concernant l'état des cheveux ; et
un processeur (3), dans lequel le processeur (3) est configuré pour comparer un degré d'endommagement des cheveux de l'utilisateur avant le traitement capillaire, détecté au moyen du capteur (1), avec une pluralité de degrés d'endommagement des cheveux enregistrés dans la mémoire (2), et pour comparer une teinte des cheveux de l'utilisateur avant le traitement capillaire, détectée au moyen du capteur (1), avec une pluralité de teintes des cheveux enregistrées dans la mémoire (2), pour déterminer un degré d'endommagement des cheveux le plus similaire et une teinte des cheveux la plus similaire enregistrés dans la mémoire (2), et
• pour fournir un état des cheveux prédit et une teinte des cheveux prédite sur la base du degré d'endommagement des cheveux le plus similaire respectivement déterminé et de la teinte des cheveux la plus similaire déterminée et d'une couleur des cheveux souhaitée de l'utilisateur, dans lequel le processeur est en outre configuré pour mettre à jour au moins une information concernant l'état des cheveux dans la mémoire (2) sur la base d'un écart entre une information concernant l'état des cheveux d'un utilisateur après un traitement capillaire, déterminée au moyen du capteur (1), et une information concernant l'état des cheveux prédite de l'utilisateur, et pour remplacer dans la mémoire un degré d'endommagement des cheveux déterminé lors d'une mesure précédente de l'état des cheveux et une teinte des cheveux déterminée lors d'une mesure précédente de l'état des cheveux par un degré d'endommagement des cheveux mesuré ultérieurement et une teinte des cheveux mesurée ultérieurement.

2. Système selon la revendication 1,
dans lequel le capteur (1) comprend un capteur de spectroscopie dans le proche infrarouge (capteur NIR) et/ou une caméra et un moyen d'étalonnage de couleurs.

3. Système selon la revendication 1,
dans lequel le capteur (1) comprend un capteur de spectroscopie dans le proche infrarouge (capteur NIR) et/ou un photomètre.

4. Système selon la revendication 1,
dans lequel le capteur (1) comprend un capteur de spectroscopie dans le proche infrarouge (capteur NIR) et/ou un capteur pour la lumière visible (capteur VIS).

5. Système selon l'une des revendications 1 à 4,
dans lequel le système comprend en outre un dispositif d'affichage (3) permettant de représenter au moins une information basée sur l'information concernant l'état des cheveux mémorisée dans la mémoire (2).

6. Système selon la revendication 5,
dans lequel le capteur (1) est réalisé dans un appareil mobile, et dans lequel le dispositif d'affichage (3) est réalisé dans l'appareil mobile et/ou dans un miroir intelligent.

7. Système selon la revendication 6,
dans lequel un échange d'informations entre l'appareil mobile et la mémoire (2) est réalisé au moyen d'une application (App).

8. Système selon la revendication 1,
dans lequel le processeur est en outre configuré pour déterminer un écart entre une teinte des cheveux déterminée avant un traitement capillaire au moyen du capteur (1) ou une teinte des cheveux prédite avant un traitement capillaire et une teinte des cheveux déterminée après un traitement capillaire au moyen du capteur (1) par une comparaison de valeurs de teintes des cheveux respectivement associées.

9. Système selon l'une des revendications précédentes,
dans lequel le processeur est en outre configuré pour attribuer l'information concernant l'état des cheveux de l'utilisateur, détectée au moyen du capteur (1), respectivement à l'utilisateur dans la mémoire (2).

10. Procédé permettant d'optimiser un système de conseil cosmétique, présentant :
• la détermination d'au moins une information concernant l'état des cheveux d'un utilisateur au moyen d'au moins un capteur (1) avant et après un traitement capillaire, dans lequel l'information concernant l'état des cheveux comprend un degré d'endommagement des cheveux et une teinte des cheveux ;
• la détermination d'un écart entre une information concernant l'état des cheveux prédite sur la base de l'information concernant l'état des cheveux de l'utilisateur avant le traitement capillaire déterminée au moyen du capteur, et l'information concernant l'état des cheveux de l'utilisateur après le traitement capillaire déterminée au moyen du capteur ; et
• la mise à jour d'au moins une information concernant l'état des cheveux utilisée pour déterminer l'état des cheveux prédit dans une mémoire (2) sur la base de l'écart déterminé, dans lequel la mise à jour comprend un remplacement dans la mémoire du degré d'endommagement des cheveux déterminé lors d'une mesure précédente de l'état des cheveux et de la teinte des cheveux déterminée lors d'une mesure précédente de l'état des cheveux par un degré d'endommagement des cheveux mesuré ultérieurement et une teinte des cheveux mesurée ultérieurement ;
• dans lequel la détermination de l'information concernant l'état des cheveux prédite comprend :
• la détermination du degré d'endommagement des cheveux de l'utilisateur avant le traitement capillaire et la détermination de la teinte des cheveux de l'utilisateur avant le traitement capillaire,
• la comparaison du degré d'endommagement des cheveux déterminé avec au moins un degré d'endommagement des cheveux parmi une pluralité de degrés d'endommagement des cheveux enregistrés dans la mémoire (2) et la comparaison de la teinte des cheveux déterminée avec au moins une teinte des cheveux parmi une pluralité de teintes des cheveux enregistrées dans la mémoire (2),
• la détermination d'un degré d'endommagement des cheveux enregistré le plus similaire et d'une teinte des cheveux enregistrée la plus similaire dans la mémoire (2), et
• la fourniture d'une teinte des cheveux prédite sur la base du degré d'endommagement des cheveux enregistré le plus similaire respectivement déterminé et de la teinte des cheveux enregistrée la plus similaire déterminée et d'une couleur des cheveux souhaitée prédéfinie.

11. Procédé selon la revendication 10, dans lequel le procédé comprend en outre une comparaison de l'information concernant l'état des cheveux de l'utilisateur avant le traitement capillaire, déterminée au moyen du capteur (1), avec l'information concernant l'état des cheveux de l'utilisateur après le traitement capillaire, déterminée au moyen du capteur (1).

12. Procédé selon la revendication 10, dans lequel la mise à jour comprend au moins une mise à jour d'une teinte des cheveux et/ou d'un degré d'endommagement des cheveux dans la mémoire (2).
